# EUROPÄISCHE PATENTSCHRIFT

(11) **EP 4 254 233 B1**
(45) Veröffentlichungstag und Bekanntmachung des Hinweises auf die Patenterteilung: **16.10.2024**
(21) Anmeldenummer: 22165876.8
(22) Anmeldetag: 31.03.2022
(51) Int. Cl.: G06F 21/44, G06F 21/33, G06F 21/10, G06F 21/51, G06F 21/53, G06F 21/57

(54) **VERFAHREN UND SYSTEM ZUR GESICHERTEN AUSFÜHRUNG VON STEUERUNGSANWENDUNGEN, HOST**
METHOD AND SYSTEM FOR SECURE EXECUTION OF CONTROL APPLICATIONS, HOST
PROCÉDÉ ET SYSTÈME DE MISE EN OEUVRE SÉCURISÉE D'APPLICATIONS DE COMMANDE, HÔTE

(43) Veröffentlichungstag der Anmeldung: 04.10.2023
(73) Patentinhaber: Siemens Aktiengesellschaft, 80333 München (DE)
(72) Erfinder: Albrecht, Harald, 90475 Nürnberg (DE); Baur, Nils, 91058 Erlangen (DE); Höme, Stephan, 91126 Schwabach (DE)
(74) Vertreter: Siemens Patent Attorneys

(56) Entgegenhaltungen:
- EP-A1- 3 709 107
- EP-A1- 3 975 502
- EP-A1- 4 152 689
- EP-A1- 4 216 085
- KOHNHAUSER FLORIAN ET AL: "On the Security of IIoT Deployments: An Investigation of Secure Provisioning Solutions for OPC UA", IEEE ACCESS, IEEE, USA, vol. 9, 9 July 2021 (2021-07-09), pages 99299 - 99311, XP011867384, DOI: 10.1109/ACCESS.2021.3096062

## Beschreibung

Die vorliegende Erfindung betrifft ein Verfahren und System zur gesicherten Ausführung von Steuerungsanwendungen sowie einen Host, insbesondere einen Automatisierungsfunktionen bereitstellenden Host innerhalb eines industriellen Automatisierungssystems. Das System und der Host sind zur Durchführung des erfindungsgemäßen Verfahrens vorgesehen.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Hosts oder virtuelle Maschinen eines industriellen Automatisierungssystems verteilt werden.

In WO 2020/182627 A1 ist ein Verfahren zur Überwachung der Integrität eines industriellen Cyber-physischen Systems beschrieben, bei dem Messdaten, die mit verschiedenen Sensoren des Cyber-physischen Systems erfasst wurden, bzw. Steuerdaten, die für verschiedene Aktuatoren des Cyber-physischen Systems bestimmt sind, bereitgestellt bzw. abgegriffen werden. Außerdem wird wenigstens ein Messdaten-Zusammenhangsparameter zwischen den mit den verschiedenen Sensoren erfassten Messdaten ermittelt, bzw. es wird wenigstens ein Steuerdaten-Zusammenhangsparameter zwischen den für die verschiedenen Aktuatoren bestimmten Steuerdaten ermittelt. Der wenigstens eine Messdaten-Zusammenhangsparameter wird mit einer Messdaten-Zusammenhangs-Referenz verglichen, bzw. der wenigstens eine Steuerdaten-Zusammenhangsparameter wird mit einer Steuerdaten-Zusammenhangs-Referenz verglichen. Basierend auf dem Vergleich wird die Integrität des zu überwachenden Cyber-physischen Systems beurteilt.

Die ältere europäische Patentanmeldung mit dem Anmeldeaktenkennzeichen 21197157.7, veröffentlicht als EP 4152689 A1, betrifft ein Verfahren zur Erstellung eines Zertifikates für die sichere Bereitstellung von Diensten mittels Ablaufsteuerungskomponenten in einer Ablaufsteuerungsumgebung an einen Dienstabnehmer. Dabei ist dem Dienst jeweils zumindest eine Server-Komponente zugeordnet, die durch eine in die Ablaufsteuerungsumgebung ladbare und dort ausführbare Ablaufsteuerungskomponente gebildet wird. Zumindest eine Proxy-Komponente eines die Ablaufsteuerungsumgebung umfassenden Teilnetzes, nimmt Anfragen von einem Dienstabnehmer an. Eine zentrale Verzeichnisdienst-Komponente verwaltet die innerhalb des Teilnetzes gültigen Adressierungsinformationen einer internen Endpunkt-Adresse der Server-Komponente und zugehörigen äußeren Endpunkt-Adresse und übermittelt diese an die Proxy-Komponente. Eine Registrierung der Server-Komponente erfolgt mit ihrer internen Endpunkt-Adresse. Ein interner Verzeichnisdienst, der die erforderlichen Informationen über äußere und zugehörige interne Endpunkt-Adresse vom lokalen Verzeichnisdienst erhält, erzeugt das für eine spätere Verschlüsselung der Kommunikation benötigte Zertifikat mit der ermittelten zugehörigen äußeren Endpunkt-Adresse und übermittelt dieses an die Server-Komponente, damit ein Dienstabnehmer unter Verwendung des Zertifikats eine verschlüsselte Verbindung zu der Server-Komponente aufbauen kann.

Aus der älteren europäischen Patentanmeldung mit dem Anmeldeaktenzeichen 22152226.1, veröffentlicht als EP 4216085 A1, ist ein Verfahren zur sicheren Bereitstellung eines Dienstes durch eine zentrale Bereitstellungsinstanz auf einem Gerät zur Ausführung bei Abruf durch einen Dienstabnehmer bekannt. Dabei ist dem Dienst jeweils zumindest eine Server-Komponente zugeordnet, die durch eine in die Ablaufsteuerungsumgebung ladbare und dort ausführbare Ablaufsteuerungskomponente gebildet wird. Dem Gerät wird eine eindeutig identifizierbare ablauffähige Instanz des Dienstes bereitgestellt. Der Dienst wird bei Bereitstellung ein der Dienstinstanz zugewiesenes eindeutiges Dienstzertifikat mitgeliefert, das untrennbar mit der Dienstinstanz verknüpft wird und die Dienstinstanz eindeutig identifiziert. Außerdem wird ein dem Dienstzertifikat zugehöriges, ebenfalls eindeutiges Gerätezertifikat erzeugt und an das Gerät übermittelt. Das Gerät weist sich bei dem Dienst mit dem Gerätezertifikat aus, während der Dienst das Gerätezertifikat mit Hilfe des Dienstzertifikats prüft. Das Gerät erhält somit die Autorität für die weitere Durchführung der Bereitstellung des Dienstes erforderliche, geschützte Informationen in einem Anwendungsinstanz-Zertifikat an den Dienst zu übertragen.

Insbesondere bei OPC UA-Server-Apps bestehen anwenderseitige Anforderungen, die über eine reine Verbindungsbereitstellung zwischen Clients und Servern hinausgehen und auf eine Überprüfung abzielen, ob Steuerungsanwendungen vertrauenswürdig sind. Eine solche Überprüfung soll aufwandsarm sowie ohne zusätzliches Expertenwissen bei Einrichtung und Betrieb zu realisieren sein. Angesichts zukünftig zu erwartender Mengen bereitzustellender und zu konfigurierender Steuerungsanwendungen ist eine handhabbare Komplexität dabei von zentraler Bedeutung. Entsprechend bisherigen Ansätzen ist zudem immer noch ein relativ hoher Grad an manueller Konfiguration erforderlich ist. Dies ist zeitintensiv und fehleranfällig.

Der vorliegenden Erfindung liegt die Aufgabe zugrunde, ein Verfahren zur gesicherten Ausführung von Steuerungsanwendungen zu schaffen, das eine einfache und fehlersichere Konfiguration der Steuerungsanwendungen ermöglicht, und eine geeignete Vorrichtung zur Durchführung des Verfahrens anzugeben.

Diese Aufgabe wird erfindungsgemäß durch ein Verfahren mit den in Anspruch 1 angegebenen Merkmalen, durch ein System mit den in Anspruch 11 angegebenen Merkmalen und durch einen Host mit den in Anspruch 12 angegebenen Merkmalen gelöst. Vorteilhafte Weiterbildungen sind in den abhängigen Ansprüchen angegeben.

Entsprechend dem erfindungsgemäßen Verfahren zur gesicherten Ausführung von Steuerungsanwendungen werden die Steuerungsanwendungen mittels Software-implementierten Containern bereitgestellt, die jeweils in eine auf einem Host eingerichtete Container-Laufzeitumgebung ladbar und dort ausführbar sind. Eine Prüfkomponente des jeweiligen Hosts berechnet über Host-spezifische Merkmale und über Merkmale der jeweiligen Steuerungsanwendung jeweils eine Prüfkennung. Die Prüfkennung und ein initiales Anwendungs-Zertifikat der Steuerungsanwendung werden an eine Registrierungskomponente übermittelt. Das initiale Anwendungs-Zertifikat kann insbesondere ein gemäß IEEE 802.1AR erzeugter Initial Device Identifier, IDevID, sein.

Die Prüfkennung kann aufwandsarm beispielsweise mittels eines einem initialen Geräte-Zertifikat des Hosts zugeordneten Signaturschlüssels signiert werden. Vorteilhafterweise wird das initiale Anwendungs-Zertifikat jeweils durch einen Anbieter der jeweiligen Steuerungsanwendung oder durch einen App-Store sicher bereitgestellt. Für eine Erfüllung hoher Sicherheitsanforderungen umfassen die Prüfkennung und das initiale Anwendungs-Zertifikat vorzugsweise jeweils einen gemeinsamen Identifikator, über welche die Prüfkennung und das initiale Anwendungs-Zertifikat miteinander verknüpft sind.

Die Registrierungskomponente verifiziert erfindungsgemäß die Prüfkennung und das initiale Anwendungs-Zertifikat. Bei einem positiven Verifizierungsergebnis erstellt die Registrierungskomponente ein Gerätekonfigurations-Zertifikat sowie ein Anwendungsinstanz-Zertifikat und übermittelt diese an den Host. Mittels des Gerätekonfigurations-Zertifikats wird eine Verknüpfung des Anwendungsinstanz-Zertifikats mit der Steuerungsanwendung autorisiert. Durch das Anwendungsinstanz-Zertifikat wird eine Ausführung des die Steuerungsanwendung bereitstellenden Containers auf dem Host autorisiert. Durch die Verknüpfung des Anwendungsinstanz-Zertifikats mit der Steuerungsanwendung können insbesondere Authentisierungsfunktionen der Steuerungsanwendung mit dem Anwendungsinstanz-Zertifikat versorgt bzw. konfiguriert werden.

Die vorliegende Erfindung ermöglicht eine Erstellung von Gerätekonfigurations-Zertifikaten unabhängig von einem Anbieter der jeweiligen Steuerungsanwendung oder durch einen App-Store. Entsprechende Anbieter- oder App-Store-seitige Ticketgeneratoren sind damit nicht erforderlich. Insbesondere werden Bereitstellungs- und Konfigurationsprozesse dadurch stark vereinfacht, dass Gerätekonfigurations- und Anwendungsinstanz-Zertifikate nicht mehr von Steuerungsanwendungs-Anbietern bzw. App-Store-Betreibern für eine Vielzahl möglicher App- und Geräte-Varianten bereitgehalten werden müssen.

Entsprechend einer bevorzugten Ausgestaltung der vorliegenden Erfindung authentisiert sich der Host mittels der Prüfkennung gegenüber der Registrierungskomponente. Damit kann die Registrierungskomponente vom initialen Anwendungs-Zertifikat umfasste Angaben zuverlässig auf Übereinstimmung mit Merkmalen vergleichen, über welche die Prüfkennung berechnet ist. Insbesondere validiert die Registrierungskomponente die Prüfkennung und das initiale Anwendungs-Zertifikat, wenn die vom initialen Anwendungs-Zertifikat umfassten Angaben mit den verglichenen Merkmalen übereinstimmen. Dies ermöglich eine effiziente und sichere Validierung der Prüfkennung und des initialen Anwendungs-Zertifikats.

Das initiale Anwendungs-Zertifikat bzw. das Anwendungsinstanz-Zertifikat können beispielsweise Lizenzinformationen umfassen, durch die ein Funktionsumfang der Steuerungsanwendung definiert ist. Damit ist also eine flexible und manipulationssichere Freischaltung lizenzierter Funktionen der Steuerungsanwendungen möglich. Darüber hinaus werden die Prüfkennung, das Gerätekonfigurations-Zertifikat bzw. das Anwendungsinstanz-Zertifikat vorzugsweise in einem Zertifikats-Speicher des Hosts gespeichert. Dies ermöglicht eine besonders sichere Implementierung der vorliegenden Erfindung.

Das erfindungsgemäße System ist zur Durchführung eines Verfahrens entsprechend vorangehenden Ausführungen vorgesehen und umfasst zumindest einen Host sowie eine Registrierungskomponente. Der Host ist dafür ausgestaltet, Steuerungsanwendungen mittels Software-implementierten Containern bereitzustellen, die jeweils in eine auf dem Host eingerichtete Container-Laufzeitumgebung ladbar und dort ausführbar sind. Außerdem umfasst der Host eine Prüfkomponente, die dafür ausgestaltet ist, über Host-spezifische Merkmale und über Merkmale der jeweiligen Steuerungsanwendung jeweils eine Prüfkennung zu berechnen. Zusätzlich ist der Host dafür ausgestaltet, die Prüfkennung und ein initiales Anwendungs-Zertifikat der Steuerungsanwendung an die Registrierungskomponente zu übermitteln.

Die Registrierungskomponente des erfindungsgemäßen Systems ist dafür ausgestaltet, die Prüfkennung und das initiale Anwendungs-Zertifikat zu verifizieren und bei einem positiven Verifizierungergebnis ein Gerätekonfigurations-Zertifikat und ein Anwendungsinstanz-Zertifikat zu erstellen und an den Host zu übermitteln. Darüber hinaus ist der Host zusätzlich dafür ausgestaltet, mittels des Gerätekonfigurations-Zertifikats eine Verknüpfung des Anwendungsinstanz-Zertifikats mit der Steuerungsanwendung zu autorisieren und durch das Anwendungsinstanz-Zertifikat eine Ausführung des die Steuerungsanwendung bereitstellenden Containers zu autorisieren.

Der erfindungsgemäße Host ist für oben genanntes System geeignet und dafür ausgestaltet, Steuerungsanwendungen mittels Software-implementierten Containern bereitzustellen, die jeweils in eine auf dem Host eingerichtete Container-Laufzeitumgebung ladbar und dort ausführbar sind. Der Host umfasst eine Prüfkomponente, die dafür ausgestaltet ist, über Host-spezifische Merkmale und über Merkmale der jeweiligen Steuerungsanwendung jeweils eine Prüfkennung zu berechnen.

Der erfindungsgemäße Host ist zusätzlich dafür ausgestaltet, die Prüfkennung und ein initiales Anwendungs-Zertifikat der Steuerungsanwendung an eine Registrierungskomponente zu übermitteln. Darüber hinaus ist der Host dafür ausgestaltet, mittels eines durch die Registrierungskomponente erzeugten Gerätekonfigurations-Zertifikats eine Verknüpfung eines durch die Registrierungskomponente erzeugten Anwendungsinstanz-Zertifikats mit der Steuerungsanwendung zu autorisieren und durch das Anwendungsinstanz-Zertifikat eine Ausführung des die Steuerungsanwendung bereitstellenden Containers zu autorisieren.

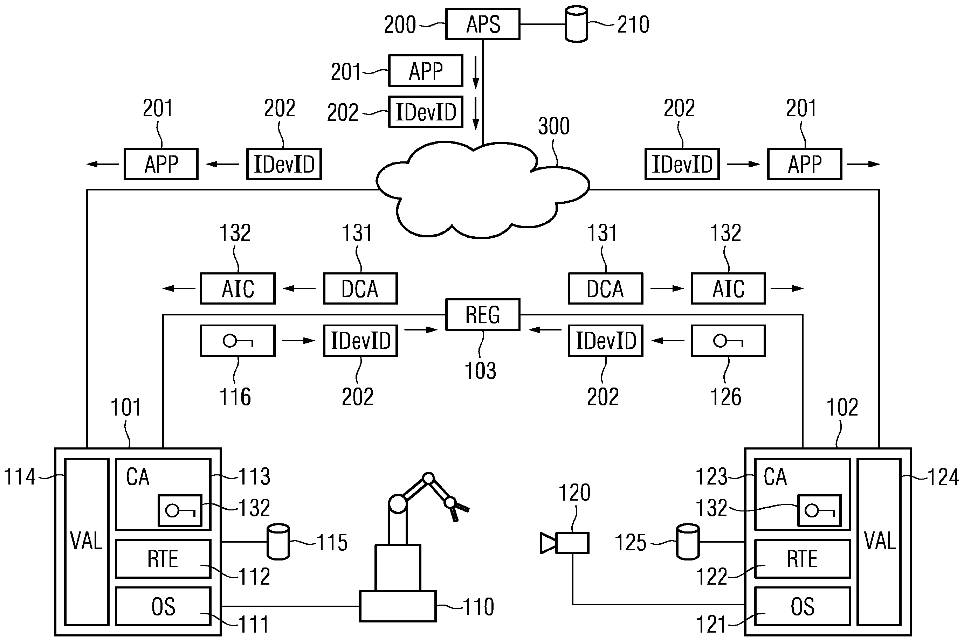

Die vorliegende Erfindung wird nachfolgend an einem Ausführungsbeispiel anhand der Zeichnung näher erläutert. Es zeigt die
- Figur: ein System mit mehreren Hosts zur Bereitstellung von Steuerungsanwendungen, einem App-Store und einer Registrierungskomponente.

Das in der Figur dargestellte System umfasst mehrere Hosts 101-102, einen App-Store 200 und eine Registrierungskomponente 103. Die Hosts 101-102 und die Registrierungskomponente 103 sind im vorliegenden Ausführungsbeispiel von einem mittels eines Firewall-Systems abgesicherten Teilnetz umfasst, das einem industriellen Automatisierungssystem zugeordnet ist. Das abgesicherte Teilnetz ist über ein Weitverkehrsnetz 300, das insbesondere Internet-Kommunikationsverbindungen bereitstellt, mit dem App-Store 200 verbunden.

Die Hosts 101-102 implementieren im vorliegenden Ausführungsbeispiel Funktionen von Automatisierungsgeräten, beispielsweise Bedien- und Beobachtungsstationen, speicherprogrammierbare Steuerungen, RFID-Lesegeräte oder Systeme für maschinelle Bildverarbeitung sein. Neben den Hosts 101-102 und der Registrierungskomponente 103 können auch Netzinfrastrukturgeräte, wie Switche oder Router, vom abgesicherten Teilnetz des industriellen Automatisierungssystems umfasst sein. Netzinfrastrukturgeräte dienen insbesondere zum Anschluss von speicherprogrammierbaren Steuerungen, Eingabe/Ausgabe-Einheiten (I/O-Module) oder Bedien- und Beobachtungsstationen.

Speicherprogrammierbare Steuerungen umfassen beispielsweise jeweils ein Kommunikationsmodul, eine Zentraleinheit sowie zumindest eine Eingabe/Ausgabe-Einheit. Eingabe/Ausgabe-Einheiten dienen einem Austausch von Steuerungs- und Messgrößen zwischen speicherprogrammierbaren Steuerungen und durch die speicherprogrammierbaren Steuerungen gesteuerten Maschinen oder Vorrichtungen. Die Zentraleinheiten sind insbesondere für eine Ermittlung geeigneter Steuerungsgrößen aus erfassten Messgrößen vorgesehen. Eingabe/Ausgabe-Einheiten können grundsätzlich auch als dezentrale Peripheriemodule ausgestaltet sein, die entfernt von einer speicherprogrammierbaren Steuerung angeordnet sind.

Die Hosts 101-102 sind dazu ausgestaltet und eingerichtet, Steuerungsanwendungen 113, 123 mittels Software-Containern bereitzustellen, die in eine auf einem Host-Betriebssystem 111, 121 installierte Container-Laufzeitumgebung 112, 122 ladbar und dort ausführbar sind. Die Steuerungsanwendungen 113, 123 implementieren insbesondere Funktionen von Automatisierungsgeräten, beispielsweise Steuerungs- und Überwachungsfunktionen in Bezug auf mit den Hosts 101-102 verbundenen Maschinen oder Vorrichtungen 110, 120, oder andere zeitkritische Dienste.

Der App-Store 200 umfasst ein Image-Repository 210 zur Bereitstellung von Speicherabbildern (Images) 201 für die Software-Container. Auf diese Weise können die Speicherabbilder 201 für die Software-Container durch eine Vielzahl von Nutzern abgerufen werden. Alternativ dazu können die Speicherabbilder 201 auch direkt durch einen Anbieter der jeweiligen Steuerungsanwendung bereitgestellt werden. Grundsätzlich kann der App-Store 200 als ein durch eine Vielzahl von Nutzern lesend bzw. schreibend zugreifbares Speicher- und Bereitstellungssystem ausgestaltet sein.

Die Software-Container für die Steuerungsanwendungen 113, 123 können jeweils von einem Host 101, 102 mit Container-Laufzeitumgebung 112, 122 auf einen anderen Host 102, 101 mit Container-Laufzeitumgebung 122, 112 zur dortigen Ausführung migriert bzw. auf mehreren Hosts 101-102 mit Container-Laufzeitumgebung 112, 122 zeitgleich ausgeführt werden. Vorzugsweise sind Software-Container jeweils dafür ausgestaltet und eingerichtet, von anderen Software-Containern oder Container-Gruppen, z.B. Pods, isoliert innerhalb der Container-Laufzeitumgebung auf dem jeweiligen Host-Betriebssystem 111, 121 abzulaufen. Vorteilhafterweise nutzen die Software-Container jeweils gemeinsam mit anderen auf dem jeweiligen Host 101, 102 ablaufenden Software-Containern einen Kernel des Host-Betriebssystems 111, 121. Grundsätzlich können für die Software-Container alternativ zu Docker Containern auch andere Micro-Virtualisierungskonzepte, wie Snaps, verwendet werden.

Im vorliegenden Ausführungsbeispiel ist die Container-Laufzeitumgebung 112, 122 eine Container Engine, durch die ein Anlegen, Löschen bzw. Verknüpfen von virtuellen Ressourcen erfolgt. Dabei umfassen die virtuellen Ressourcen neben Software-Containern auch virtuelle Kommunikationsnetze und diesen zugeordnete Verbindungen. Insbesondere kann die Container-Laufzeitumgebung 112, 122 eine Docker Engine oder einen Snap Core umfassen, die bzw. der auf dem jeweiligen Automatisierungsgerät 101-102 abläuft.

Zur gesicherten Ausführung von Steuerungsanwendungen berechnet eine als Ticketgenerator ausgestaltete Prüfkomponente 114, 124 des jeweiligen Hosts 101, 102 über Host-spezifische Merkmale und über Merkmale der jeweiligen Steuerungsanwendung 113, 123 jeweils ein Ticket bzw. eine Prüfkennung 116, 126. Die Prüfkennung 116, 126 wird vorzugsweise mittels eines einem initialen Geräte-Zertifikat des jeweiligen Hosts 101, 102 zugeordneten Signaturschlüssels signiert.

Dadurch dass die Prüfkomponente 114, 124 dem jeweiligen Host 101, 102 zugeordnet ist und nicht dem App-Store 200 wird insbesondere eine sichere Nutzung von Sideloaded Apps vereinfacht. Zudem wird der App-Store 200 von einer Erstellung der Prüfkennungen 116, 126 entlastet. Die Prüfkomponenten 114, 124 werden jeweils nach einer Installation einer Steuerungsanwendung 113, 123 aufgerufen sammeln für eine Erstellung der Prüfkennungen 116, 126 benötigte Informationen. Die Prüfkennungen 116, 126 basieren hinsichtlich ihres Aufbaus vorzugsweise auf OPC Foundation Specification Part 21, können aber auch hiervon abweichen.

Mit der Prüfkennung 116, 126 kann sich der jeweilige Host 101, 102 über eine sichere Verbindung, beispielsweise entsprechend OPC Foundation Specification Part 21, an einer Registrierungskomponente 103 anmelden und ein Application-Software Provisioning starten. Hierzu werden die Prüfkennung 116, 126 und ein initiales Anwendungs-Zertifikat 202 der jeweiligen Steuerungsanwendung 113, 123 an die Registrierungskomponente 103 übermittelt. Insbesondere authentisiert sich der jeweilige Host 101, 102 mittels der Prüfkennung 116, 126 gegenüber der Registrierungskomponente 103.

Im vorliegenden Ausführungsbeispiel ist das initiale Anwendungs-Zertifikat 202 ein gemäß IEEE 802.1AR erzeugter Initial Device Identifier (IDevID), der durch den App-Store 200 bereitgestellt wird. Alternativ dazu kann das initiale Anwendungs-Zertifikat 202 auch durch einen Anbieter der jeweiligen Steuerungsanwendung 113, 123 bereitgestellt werden. Die Prüfkennung 116, 126 und das initiale Anwendungs-Zertifikat 202 umfassen jeweils einen gemeinsamen Identifikator, über welche die Prüfkennung und das initiale Anwendungs-Zertifikat miteinander verknüpft sind. Ein solcher gemeinsamer Identifikator kann beispielsweise ein ProductInstanceURI sein.

Die Registrierungskomponente 103 verifiziert die Prüfkennung 116, 126 und das initiale Anwendungs-Zertifikat 202. Dabei vergleicht die Registrierungskomponente 103 vom initialen Anwendungs-Zertifikat 202 umfasste Angaben auf Übereinstimmung mit Merkmalen, über welche die Prüfkennung 116, 126 berechnet ist. Wenn die vom initialen Anwendungs-Zertifikat 202 umfassten Angaben mit den verglichenen Merkmalen übereinstimmen, validiert die Registrierungskomponente 103 die Prüfkennung 116, 126 und das initiale Anwendungs-Zertifikat 202. Bei einem positiven Verifizierungsergebnis erstellt die Registrierungskomponente 103 ein Gerätekonfigurations-Zertifikat 131 und ein Anwendungsinstanz-Zertifikat 132 und übermittelt diese an den jeweiligen Host 101, 102.

Mittels des Gerätekonfigurations-Zertifikats 131 wird eine Verknüpfung des Anwendungsinstanz-Zertifikats 132 mit der jeweiligen Steuerungsanwendung 113, 123 autorisiert. Durch die Verknüpfung des Anwendungsinstanz-Zertifikats 132 mit der jeweiligen Steuerungsanwendung 113, 123 werden Authentisierungsfunktionen der Steuerungsanwendung 113, 123 mit dem Anwendungsinstanz-Zertifikat 132 versorgt bzw. konfiguriert. Damit kann durch das Anwendungsinstanz-Zertifikat 132 eine Ausführung des die jeweilige Steuerungsanwendung 113, 123 bereitstellenden Containers auf dem jeweiligen Host 101, 102 autorisiert werden.

Das Anwendungsinstanz-Zertifikat 132 und das Gerätekonfigurations-Zertifikat 131 stehen in einem Vertrauensverhältnis zueinander. Aufgrund dieses Vertrauensverhältnis vertraut die jeweilige Steuerungsanwendung 113, 123 der Registrierungskomponente 103 bzw. dem Gerätekonfigurations-Zertifikat 131 und lässt ein Übertragen bzw. eine Verwendung des Anwendungsinstanz-Zertifikat 132 zu. Durch eine Autorisierung mittels des Gerätekonfigurations-Zertifikats 131 entfällt insbesondere ein manuelles Einrichten einer durch die Registrierungskomponente 103 erteilten Autorisierung. Obiges Vertrauensverhältnis begründet sich durch beschriebenen Bereitstellungsprozess, bei dem das initiale Anwendungs-Zertifikat 202 und die Prüfkennung 116, 126 zur gegenseitigen Identitätsüberprüfung benutzt werden.

Die Prüfkennung 116, 126, das Gerätekonfigurations-Zertifikat 131 und/oder das Anwendungsinstanz-Zertifikat 132 werden vorzugsweise in einem Zertifikats-Speicher 115, 125 des jeweiligen Hosts 101, 102 gespeichert. Insbesondere können das initiale Anwendungs-Zertifikat 202 bzw. das Anwendungsinstanz-Zertifikat 132 Lizenzinformationen umfassen, durch die ein Funktionsumfang der jeweiligen Steuerungsanwendung 113, 123 definiert ist.

## Patentansprüche

1. Verfahren zur gesicherten Ausführung von Steuerungsanwendungen, bei dem
- die Steuerungsanwendungen (113, 123) mittels Software-implementierten Containern bereitgestellt werden, die jeweils in eine auf einem Host (101, 102) eingerichtete Container-Laufzeitumgebung (111, 112) ladbar und dort ausführbar sind,
- eine Prüfkomponente (114, 124) des jeweiligen Hosts über Host-spezifische Merkmale und über Merkmale der jeweiligen Steuerungsanwendung jeweils eine Prüfkennung (116, 126) berechnet,
- die Prüfkennung und ein initiales Anwendungs-Zertifikat (202) der Steuerungsanwendung an eine Registrierungskomponente (103) übermittelt werden,
- die Registrierungskomponente die Prüfkennung und das initiale Anwendungs-Zertifikat verifiziert und bei einem positiven Verifizierungsergebnis ein Gerätekonfigurations-Zertifikat (131) und ein Anwendungsinstanz-Zertifikat (132) erstellt und an den Host übermittelt,
- mittels des Gerätekonfigurations-Zertifikats eine Verknüpfung des Anwendungsinstanz-Zertifikats mit der Steuerungsanwendung autorisiert wird,
- durch das Anwendungsinstanz-Zertifikat eine Ausführung des die Steuerungsanwendung bereitstellenden Containers auf dem Host autorisiert wird.

2. Verfahren nach Anspruch 1,
bei dem die Prüfkennung (116, 126) mittels eines einem initialen Geräte-Zertifikat des Hosts (101, 102) zugeordneten Signaturschlüssels signiert wird.

3. Verfahren nach einem der Ansprüche 1 oder 2,
bei dem das initiale Anwendungs-Zertifikat (202) jeweils durch einen Anbieter der jeweiligen Steuerungsanwendung oder durch einen App-Store (200) bereitgestellt wird.

4. Verfahren nach einem der Ansprüche 1 bis 3,
bei dem die Prüfkennung und das initiale Anwendungs-Zertifikat jeweils einen gemeinsamen Identifikator umfassen, über welche die Prüfkennung und das initiale Anwendungs-Zertifikat miteinander verknüpft sind.

5. Verfahren nach einem der Ansprüche 1 bis 4,
bei dem durch die Verknüpfung des Anwendungsinstanz-Zertifikats mit der Steuerungsanwendung Authentisierungsfunktionen der Steuerungsanwendung mit dem Anwendungsinstanz-Zertifikat versorgt und/oder konfiguriert werden.

6. Verfahren nach einem der Ansprüche 1 bis 5,
bei dem sich der Host mittels der Prüfkennung gegenüber der Registrierungskomponente authentisiert und bei dem die Registrierungskomponente vom initialen Anwendungs-Zertifikat umfasste Angaben auf Übereinstimmung mit Merkmalen vergleicht, über welche die Prüfkennung berechnet ist.

7. Verfahren nach Anspruch 6,
bei dem die Registrierungskomponente die Prüfkennung und das initiale Anwendungs-Zertifikat bei Übereinstimmung der vom initialen Anwendungs-Zertifikat umfassten Angaben mit den verglichenen Merkmalen validiert.

8. Verfahren nach einem der Ansprüche 1 bis 7,
bei dem die Prüfkennung (116, 126), das Gerätekonfigurations-Zertifikat (131) und/oder das Anwendungsinstanz-Zertifikat (132) in einem Zertifikats-Speicher (115, 125) des Hosts (101, 102) gespeichert werden.

9. Verfahren nach einem der Ansprüche 1 bis 8,
bei dem das initiale Anwendungs-Zertifikat (202) ein gemäß IEEE 802.1AR erzeugter Initial Device Identifier, IDevID, ist.

10. Verfahren nach einem der Ansprüche 1 bis 9,
bei dem das initiale Anwendungs-Zertifikat (202) und/oder das Anwendungsinstanz-Zertifikat (132) Lizenzinformationen umfassen, durch die ein Funktionsumfang der Steuerungsanwendung (113, 123) definiert ist.

11. System zur Durchführung eines Verfahrens nach einem der Ansprüche 1 bis 10, wobei
- das System zumindest einen Host (101, 102) und eine Registrierungskomponente (103) umfasst,
- der Host dafür ausgestaltet ist, Steuerungsanwendungen (113, 123) mittels Software-implementierten Containern bereitzustellen, die jeweils in eine auf dem Host eingerichtete Container-Laufzeitumgebung (112, 122) ladbar und dort ausführbar sind,
- der Host eine Prüfkomponente (114, 124) umfasst, die dafür ausgestaltet ist, über Host-spezifische Merkmale und über Merkmale der jeweiligen Steuerungsanwendung jeweils eine Prüfkennung (116, 126) zu berechnen,
- der Host zusätzlich dafür ausgestaltet ist, die Prüfkennung und ein initiales Anwendungs-Zertifikat (202) der Steuerungsanwendung an die Registrierungskomponente zu übermitteln,
- die Registrierungskomponente dafür ausgestaltet ist, die Prüfkennung und das initiale Anwendungs-Zertifikat zu verifizieren und bei einem positiven Verifizierungsergebnis ein Gerätekonfigurations-Zertifikat (131) und ein Anwendungsinstanz-Zertifikat (132) zu erstellen und an den Host zu übermitteln,
- der Host zusätzlich dafür ausgestaltet ist, mittels des Gerätekonfigurations-Zertifikats eine Verknüpfung des Anwendungsinstanz-Zertifikats mit der Steuerungsanwendung zu autorisieren und durch das Anwendungsinstanz-Zertifikat eine Ausführung des die Steuerungsanwendung bereitstellenden Containers zu autorisieren.

12. Host für ein System nach Anspruch 11, wobei
- der Host (101, 102) dafür ausgestaltet ist, Steuerungsanwendungen (113, 123) mittels Software-implementierten Containern bereitzustellen, die jeweils in eine auf dem Host eingerichtete Container-Laufzeitumgebung (112, 122) ladbar und dort ausführbar sind,
- der Host eine Prüfkomponente (103) umfasst, die dafür ausgestaltet ist, über Host-spezifische Merkmale und über Merkmale der jeweiligen Steuerungsanwendung jeweils eine Prüfkennung (116, 126) zu berechnen,
- der Host zusätzlich dafür ausgestaltet ist, die Prüfkennung und ein initiales Anwendungs-Zertifikat (202) der Steuerungsanwendung an eine Registrierungskomponente (103) zu übermitteln,
- der Host zusätzlich dafür ausgestaltet ist, mittels eines durch die Registrierungskomponente erzeugten Gerätekonfigurations-Zertifikats (131) eine Verknüpfung eines durch die Registrierungskomponente erzeugten Anwendungsinstanz-Zertifikats (132) mit der Steuerungsanwendung zu autorisieren und durch das Anwendungsinstanz-Zertifikat eine Ausführung des die Steuerungsanwendung bereitstellenden Containers zu autorisieren.

## Claims

1. Method for the secure execution of control applications, wherein
- the control applications (113, 123) are provided by means of software-implemented containers which in each case are loadable into a container runtime environment (111, 112) set up on a host (101, 102) and are executable there,
- a check component (114, 124) of the respective host calculates a respective check identifier (116, 126) by way of host-specific features and by way of features of the respective control application,
- the check identifier and an initial application certificate (202) of the control application are communicated to a registration component (103),
- the registration component verifies the check identifier and the initial application certificate and, in the case of a positive verification result, creates a device configuration certificate (131) and an application instance certificate (132) and communicates them to the host,
- a linking of the application instance certificate with the control application is authorized by means of the device configuration certificate,
- an execution of the container providing the control application on the host is authorized by the application instance certificate.

2. Method according to Claim 1,
wherein the check identifier (116, 126) is signed by means of a signature key assigned to an initial device certificate of the host (101, 102).

3. Method according to either of Claims 1 and 2,
wherein the initial application certificate (202) is provided in each case by a provider of the respective control application or by an app store (200).

4. Method according to any of Claims 1 to 3,
wherein the check identifier and the initial application certificate in each case comprise a common identifier, by way of which the check identifier and the initial application certificate are linked with one another.

5. Method according to any of Claims 1 to 4,
wherein the linking of the application instance certificate with the control application results in authentication functions of the control application being supplied and/or configured with the application instance certificate.

6. Method according to any of Claims 1 to 5,
wherein the host is authenticated vis-à-vis the registration component by means of the check identifier and wherein the registration component compares indications which the initial application certificate comprises for correspondence with features used to calculate the check identifier.

7. Method according to Claim 6,
wherein the registration component validates the check identifier and the initial application certificate in the case of correspondence between the indications which the initial application certificate comprises and the compared features.

8. Method according to any of Claims 1 to 7,
wherein the check identifier (116, 126), the device configuration certificate (131) and/or the application instance certificate (132) are/is stored in a certificate memory (115, 125) of the host (101, 102).

9. Method according to any of Claims 1 to 8,
wherein the initial application certificate (202) is an Initial Device Identifier, IDevID, generated in accordance with IEEE 802.1AR.

10. Method according to any of Claims 1 to 9,
wherein the initial application certificate (202) and/or the application instance certificate (132) comprise(s) license information defining a functional scope of the control application (113, 123).

11. System for carrying out a method according to any of Claims 1 to 10, wherein
- the system comprises at least one host (101, 102) and a registration component (103),
- the host is designed to provide control applications (113, 123) by means of software-implemented containers which in each case are loadable into a container runtime environment (112, 122) set up on the host and are executable there,
- the host comprises a check component (114, 124) designed to calculate a respective check identifier (116, 126) by way of host-specific features and by way of features of the respective control application,
- the host is additionally designed to communicate the check identifier and an initial application certificate (202) of the control application to the registration component,
- the registration component is designed to verify the check identifier and the initial application certificate and, in the case of a positive verification result, to create a device configuration certificate (131) and an application instance certificate (132) and to communicate them to the host,
- the host is additionally designed to authorize a linking of the application instance certificate with the control application by means of the device configuration certificate and to authorize an execution of the container providing the control application by the application instance certificate.

12. Host for a system according to Claim 11, wherein
- the host (101, 102) is designed to provide control applications (113, 123) by means of software-implemented containers which in each case are loadable into a container runtime environment (112, 122) set up on the host and are executable there,
- the host comprises a check component (103) designed to calculate a respective check identifier (116, 126) by way of host-specific features and by way of features of the respective control application,
- the host is additionally designed to communicate the check identifier and an initial application certificate (202) of the control application to a registration component (103),
- the host is additionally designed to authorize a linking of an application instance certificate (132) generated by the registration component with the control application by means of a device configuration certificate (131) generated by the registration component and to authorize an execution of the container providing the control application by the application instance certificate.

## Revendications

1. Procédé de réalisation sécurisée d'applications de commande, dans lequel
- on se procure les applications (113, 123) de commande au moyen de conteneurs, qui sont mis en oeuvre par logiciel, qui peuvent être chargés respectivement dans un environnement (111, 112) de temps de parcours de conteneur agencé sur un hôte (101, 102) et qui peuvent y être réalisés,
- un composant (114, 124) de contrôle de l'hôte respectif calcule respectivement une identification (116, 126) de contrôle par des caractéristiques spécifiques à l'hôte et par des caractéristiques de l'application de commande respective,
- on transmet l'identification de contrôle et un certificat (202) d'application initial de l'application de commande à un composant (103) d'enregistrement,
- le composant d'enregistrement vérifie l'identification de contrôle et le certificat d'application initial et, si le résultat de la vérification est positif, établit un certificat (131) de configuration d'appareil et un certificat (132) d'instance d'application et les transmet à l'hôte,
- au moyen du certificat de configuration d'appareil, on autorise une combinaison du certificat d'instance d'application à l'application de commande,
- par le certificat d'instance d'application, on autorise sur l'hôte une réalisation du conteneur disposant de l'application de commande.

2. Procédé suivant la revendication 1,
dans lequel on signe l'authentification (116, 126) de contrôle au moyen d'une clé de signature affectée au certificat d'appareil initial de l'hôte (101, 102).

3. Procédé suivant l'une des revendications 1 ou 2,
dans lequel on se procure le certificat (202) d'application initial respectivement par un soumissionnaire de l'application de commande respective ou par un app store (200).

4. Procédé suivant l'une des applications 1 à 3,
dans lequel l'identification de contrôle et le certificat d'application initial comprennent respectivement un identifiant commun, par lequel l'identification de contrôle et le certificat d'application initial sont combinés entre eux.

5. Procédé suivant l'une des applications 1 à 4,
dans lequel, par la combinaison du certificat d'instance d'application à l'application de commande, on alimente des fonctions d'authentification de l'application de commande en le certificat d'instance d'application et/ou on les configure.

6. Procédé suivant l'une des revendications 1 à 5,
dans lequel l'hôte s'identifie au moyen de l'identification de contrôle vis-à-vis du composant d'enregistrement et dans lequel le composant d'enregistrement compare des indications impliquées par le certificat d'application initial de coïncidence avec des caractéristiques par lesquelles l'identification de contrôle est calculée.

7. Procédé suivant la revendication 6,
dans lequel le composant d'enregistrement valide l'identification de contrôle et le certificat d'application initial, si les indications impliquées par le certificat d'application initial coïncident avec les caractéristiques comparées.

8. Procédé suivant l'une des revendications 1 à 7,
dans lequel on met, dans une mémoire (115, 125) de certificat de l'hôte (101, 102), l'identification (116, 126) de contrôle, le certificat (131) de configuration d'appareil et/ou le certificat (132) d'instance d'application.

9. Procédé suivant l'une des revendications 1 à 8,
dans lequel le certificat (202) d'application initial est un identifiant de dispositif initial produit suivant IEEE 802.1AR, IDevID.

10. Procédé suivant l'une des revendications 1 à 9,
dans lequel le certificat (202) d'application initial et/ou le certificat (132) d'instance d'application comprennent des informations de licence, par lesquelles un périmètre de fonctions de l'application (113, 123) de commande est défini.

11. Système pour effectuer un procédé suivant l'une des revendications 1 à 10, dans lequel
- le système comprend au moins un hôte (101, 102) et un composant (103) d'enregistrement,
- l'hôte est conformé pour mettre à disposition des applications (113, 123) de commande au moyen de conteneurs, qui sont mis en oeuvre par logiciel, qui peuvent être chargé respectivement dans un environnement (112, 122) de temps de parcours de conteneur agencé sur l'hôte et qui peuvent y être réalisés,
- l'hôte comprend un composant (114, 124) de contrôle, qui est conformé pour calculer respectivement une caractéristique (116, 126) de contrôle par des caractéristiques spécifiques à l'hôte et par des caractéristiques de l'application de commande respective,
- l'hôte est conformé en outre pour transmettre aux composants d'enregistrement l'identification de contrôle et le certificat (202) d'application initial de l'application de commande,
- le composant d'enregistrement est conformé pour vérifier l'identification de contrôle et le certificat d'application initial et pour établir, si le résultat de la vérification est positif, un certificat (131) de configuration d'appareil et un certificat (132) d'instance d'application et les transmettre à l'hôte,
- l'hôte est conformé en outre pour autoriser, au moyen du certificat du configuration d'appareil, une combinaison du certificat d'instance d'application à l'application de commande et pour autoriser, par le certificat d'instance d'application, une réalisation du conteneur disposant de l'application de commande.

12. Hôte pour un système suivant la revendication 11, dans lequel
- l'hôte (101, 102) est conformé pour mettre à disposition des applications (113, 123) de commande au moyen de conteneurs mis en oeuvre par ordinateur, qui peuvent être chargés respectivement dans un environnement (112, 122) de temps de parcours de conteneur agencé sur l'hôte et y être réalisés,
- l'hôte comprend un composant (103) de contrôle, qui est conformé pour calculer respectivement une identification (116, 126) de contrôle par des caractéristiques spécifiques à l'hôte et par des caractéristiques de l'application de commande respective,
- l'hôte est conformé en outre pour transmettre à un composant (103) d'enregistrement l'identification de contrôle et un certificat (202) d'application initial de l'application de commande,
- l'hôte est conformé en outre pour autoriser, au moyen d'un certificat (131) de configuration d'appareil produit par le composant d'enregistrement, une combinaison d'un certificat (132) d'instance d'application produit par le composant d'enregistrement avec l'application de commande et pour autoriser, par le certificat d'instance d'application, une réalisation du conteneur disposant de l'application de commande.
